# EUROPEAN PATENT APPLICATION

(11) **EP 2 685 304 A1**
(43) Date of publication of application: **15.01.2014**
(21) Application number: 13175871.6
(22) Date of filing: 10.07.2013
(51) Int. Cl.: G02B 21/00

(54) **Spectroscopic confocal microscope with aperture stop for increased spatial resolution and parallelized data acquisition**

(30) Priority: 10.07.2012 JP 2012154398
(71) Applicant: Jasco Corporation, Hachioji-shi Tokyo 192-8537 (JP)
(72) Inventor: Aizawa, Kento, Tokyo 192-8537 (JP); Maeda, Katsushi, Tokyo 192-8537 (JP); Inoue, Tsutomu, Tokyo 192-8537 (JP)
(74) Representative: Henkel, Breuer & Partner

(57) **Abstract**

A confocal microscopy apparatus (10) for irradiating a measuring region of a specimen with light and for obtaining spectral information of light from the measuring region, comprising: a specimen irradiation means (20); an objective lens (32); an imaging lens (34); an aperture stop (36) having a plurality of openings disposed on an imaging plane of the imaging lens; and spectrum obtaining means (50, 60) for detecting and for obtaining the spectral information of light passing through each of the openings. Therefore, the spectral information according to light passing through each opening maintains the same spatial resolution as that obtained with the aperture stop having a circular opening, and the spectral information of light from the plurality of points of the specimen can be obtained altogether. Consequently, distribution measurement of a given measuring region of the specimen can be executed with high resolution and at high speed.

## Description

### CROSS-REFERENCE TO RELATED APPLICATIONS

This application is based on and claims the benefits of priority from Japanese Patent Application No. 2012-154398, filed on July 10, 2012, the entire contents of which are incorporated herein by reference.

### BACKGROUND OF THE INVENTION

### 1. Field of the Invention

The present invention relates to confocal microscopy apparatuses, and more specifically, to an improvement of an apparatus that can measure the distribution of constituents or the like in a specimen, by obtaining respective spectra based on beams from a plurality of points in a measuring region. The range of applications includes Raman spectroscopy apparatuses, fluorescence spectroscopy apparatuses, and infrared spectroscopy apparatuses.

### 2. Description of the Related Art

Confocal optical microscopy apparatuses have been conventionally used to direct a laser beam onto a single point on a specimen and to obtain a Raman or fluorescence spectrum from the single point with high spatial resolution. Specifically, a pair of lenses consisting of an objective lens and an imaging lens, and an aperture stop having a circular opening are used. The objective lens collects light from the specimen; the imaging lens turns the light into an image; and the circular opening of the aperture stop is placed at the imaging position. Since the aperture stop blocks light not coming from the focus of the objective lens, light passing through the circular opening can be detected to measure the spectrum of the light with high spatial resolution (Patent Literature 1).

One apparatus developed to reduce measurement time irradiates the specimen with laser light in a line-shape manner to generate Raman light from a wide area and uses an aperture stop having a slit to measure Raman light generated in a line-shape manner as a plurality of spectra (Leaflet 1).

### Patent Literature 1

Japanese Unexamined Patent Application Publication No. H9-72848 (Fig. 4)
   Leaflet 1
   "RAMAN-11," page 11 [online], Nanophoton Corporation, searched on May 16, 2012, Internet <URL: http://www.nanophoton.jp/products/raman-11/img/raman11.pdf>

### SUMMARY OF THE INVENTION

The measuring apparatus of Leaflet 1 uses the aperture stop having the slit, at the sacrifice of the spatial resolution to some degree. When Raman light or the like from a microscopic part of the specimen is measured with an aperture stop having one circular opening, high spatial resolution can be obtained in a plane orthogonal to the optical axis of the objective lens and also in the direction of the optical axis. With an aperture stop having a slit, in which the width of the slit differs from its length, the spatial resolution obtained in the width direction of the slit is the same as that obtained with an aperture stop having a circular opening, but the spatial resolution cannot be kept to the same level in the length direction of the slit.

The present invention has been made in view of the conventional techniques. An object of the present invention is to provide a confocal microscopy apparatus that can maintain the same level of spatial resolution as obtained with an aperture stop having a circular opening, can obtain spectra of beams from a plurality of points on a specimen simultaneously, and consequently can perform distribution measurement in a predetermined measuring region on the specimen with high resolution and at high speed.

In order to achieve the object described above, a confocal microscopy apparatus (10) according to the present invention is a confocal microscopy apparatus which irradiates a measuring region of a specimen with light and obtains spectral information of light from the measuring region, and includes a specimen irradiation means (20) for irradiating the measuring region with light;
an objective lens (32) disposed with its focal plane set at the measuring region;
an imaging lens (34) for forming an image from light collected by the objective lens;
an aperture stop (36) having a plurality of openings disposed on the imaging plane of the imaging lens; and
spectrum obtaining means (50, 60) for detecting light passing through the plurality of openings and obtaining the spectral information of light passing through each of the openings.

In the structure described above, the objective lens, the imaging lens, and the aperture stop form a multi-point confocal optical system. Light from a microscopic part of the specimen placed at the focal point (or the confocal point) of the objective lens passes through the objective lens and the imaging lens, forms an image at the focal point of the imaging lens, and passes through the opening disposed there. Since the aperture stop blocks light not coming from the microscopic part of the specimen, light from the microscopic part can be detected with high spatial resolution. The multi-point confocal optical system also causes light from another microscopic part (excluding the focal point) on the same focal plane of the objective lens to form an image in a position corresponding to this microscopic part on the focal plane of the imaging lens (excluding the focal point of the imaging lens). If there is another opening in the imaging position, light passes through it and is detected at high spatial resolution.

With the aperture stop having the plurality of openings, light from microscopic parts of the specimen respectively corresponding to the openings forms images at the corresponding positions of the openings. Light from a plurality of microscopic parts of the specimen corresponding to the number of openings is detected with the same spatial resolution as with an aperture stop having a circular opening. Light rays passing through the openings are detected separately, and the spectral information of the rays passing through the openings is obtained, and the information is reconstructed as an image by a computer. Through these processes, distribution measurement of a given measuring region of the specimen can be executed at high speed and with high resolution. The openings need not always be disposed in the focal position of the imaging lens. A plurality of openings need to be disposed on the focal plane of the imaging lens.

In the present invention, it is preferred that the confocal microscopy apparatus be configured such that the plurality of openings of the aperture stop are arranged in line, and the spectrum obtaining means includes:
a collimated-beam generating unit (52) which optically turns light passing through the plurality of openings into collimated beams;
a dispersion unit (54) which disperses the collimated beams according to wavelength; and
a two-dimensional array detection unit (60) having many elements that receive the dispersed light; and
when a plane containing the optical path of dispersed light according to wavelength is defined as a dispersion plane, the orientation of the dispersion unit (54) with respect to the aperture stop (36) is set to make the dispersion planes of collimated beams generated for beams passing through the openings parallel to one another.

In the structure described above, the collimated-beam generating unit turns the beams passing through the plurality of openings arranged in line into collimated beams, and these collimated beams enter the dispersion unit. The beams dispersed by the dispersion unit are received by the two-dimensional array detection unit as beams having parallel dispersion planes. The beams passing through the openings are received separately by the two-dimensional array detection unit while maintaining their high spatial resolutions, and the light intensity is detected according to wavelength. A plurality of pieces of spectral information corresponding to the plurality of openings are output simultaneously without degrading the spectrum quality, and the spectral information of light from a plurality of microscopic parts of the specimen can be obtained altogether with high quality.

In the present invention, it is preferred that, for a plurality of points on the specimen corresponding to the plurality of openings arranged in line, a movable stage (40) that moves the specimen in a direction orthogonal to the direction in which the plurality of points are arranged be provided.
In the structure described above, with the aperture stop having the plurality of openings arranged in line and the two-dimensional array detection unit, the spectral information of light can be obtained from the plurality of points distributed in line on the specimen. By obtaining the spectral information according to the position to which the specimen is moved by the movable stage, the spectral information of planes can be obtained.

In the present invention, it is preferred that the specimen irradiation means be a line-shaped irradiation means (20) for irradiating a line-shaped measuring region that includes at least a plurality of points on the specimen corresponding to the plurality of openings arranged in line. Alternatively, it is preferred that the specimen irradiating means be a multi-point irradiation means (220) for irradiating in a point-shape manner the measuring region that includes a plurality of points on the specimen corresponding to the plurality of openings arranged in line.
Here, it is preferred that the multi-point irradiation means (220) include, for example, a light source (222) having a plurality of point light sources, a collimated-beam generating lens (224) which turns light from the plurality of point light sources into collimated beams, and a beam splitting element (BS or DM) disposed between the objective lens and the imaging lens, and the beam splitting element reflect the collimated beams from the collimated-beam generating lens (224) toward the objective lens (232) and transmit part of the light coming from the objective lens.

In the structures described above, the specimen can be irradiated in line with optical beams from the light source (so-called line-shaped irradiation), or the specimen can be irradiated at a plurality of points. Therefore, if the plurality of points on the specimen corresponding to the plurality of openings are distributed in line, those points can be irradiated efficiently by line-shaped irradiation or multi-point irradiation. As a result, the usage efficiency of the beams is improved, and the specimen can be protected from damage caused by excessive irradiation.

As described above, a confocal microscopy apparatus according to the present invention uses an aperture stop having a plurality of openings and obtains spectral information according to light passing through these openings. Therefore, the spectral information according to light passing through each opening maintains the same spatial resolution as that obtained with an aperture stop having a circular opening, and the spectral information of light from the plurality of points of the specimen can be obtained altogether. Consequently, distribution measurement of a given measuring region of the specimen can be executed with high resolution and at high speed.

### BRIEF DESCRIPTION OF THE DRAWINGS

Fig. 1 illustrates an outlined overall configuration of a confocal microscopy apparatus according to a first embodiment.
Figs. 2(A) and 2(B) illustrate mechanisms of a line-shaped irradiation means used in the confocal microscopy apparatus: Fig. 2(A) shows a beam-shaping unit of the beam expansion type, and Fig. 2(B) shows a beam-shaping unit of the beam scanning type.
Figs. 3(A) and 3(B) illustrate that high spatial resolution can be obtained with the confocal microscopy apparatus: Fig. 3(A) shows a conventional aperture stop having a slit, and Fig. 3(B) shows an aperture stop having a plurality of openings in this embodiment.
Fig. 4 shows an outlined configuration of a spectroscope and a CCD detector used in the confocal microscopy apparatus.
Figs. 5(A) and 5(B) illustrate the binning method of the CCD detector used in the confocal microscopy apparatus: Fig. 5(A) shows a plurality of tracks formed on the light receiving surface of the CCD detector, and Fig. 5(B) shows spectral information of the individual tracks.
Fig. 6 illustrates an outlined overall configuration of a confocal microscopy apparatus according to a second embodiment.
Figs. 7(A) and 7(B) illustrate specific example configurations of a light source used in the confocal microscopy apparatus: Fig. 7(A) shows a bundle of fibers having circular cross sections, and Fig. 7(B) shows a bundle of fibers having elliptical cross sections.
Figs. 8(A) and 8(B) illustrate modifications of the aperture stop having the plurality of openings used in the confocal microscopy apparatuses: Fig. 8(A) shows an aperture in which elliptical openings are arranged, and Fig. 8(B) shows an aperture in which rectangular openings are arranged.
Fig. 9 illustrates a modification of the overall configuration of the confocal microscopy apparatuses in the above embodiments.

### DESCRIPTION OF THE PREFERRED EMBODIMENTS

Preferred embodiments of the present invention will be described next with reference to the drawings.

### First Embodiment

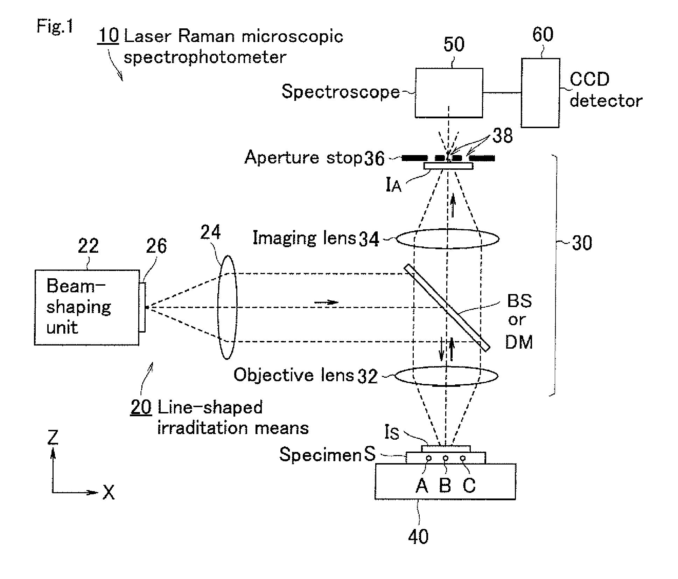

Fig. 1 illustrates an outlined configuration of a laser Raman microscopic spectrophotometer (hereafter called a Raman spectroscopy apparatus 10) in a first embodiment of a confocal microscopy apparatus according to the present invention. The Raman microscopy apparatus 10 is an apparatus for obtaining a Raman spectrum by irradiating a specimen S with laser light and collecting Raman light scattered from the specimen S. The major components of the apparatus include a line-shaped irradiation means (line-shaped irradiation light source 20), a confocal optical means 30, a movable stage 40, and a spectroscope 50 and a CCD detector 60, serving as spectrum obtaining means.

The confocal optical means 30 will be described first. The confocal optical means 30 includes a pair of lenses (an objective lens 32 and an imaging lens 34) and an aperture stop 36. The objective lens 32 is positioned with its focal plane set at the measuring region on the specimen S and has two functions, focusing a line-shaped beam from the line-shaped irradiation means 20 onto the specimen S and collecting Raman light from the irradiated specimen S. The imaging lens 34 is placed on the optical axis of the objective lens 32 and turns Raman light collected by the objective lens 32 into an image at the position of the subsequent aperture stop 36. The aperture stop 36 has a plurality of openings 38, which are arranged in line (in the X direction in the figure) on the imaging plane of the imaging lens 34. The shapes of the individual openings 38 can be circular, elliptical, rectangular, or other shapes, selected appropriately depending on the purpose of measurement.

The line-shaped irradiation means 20 includes a beam-shaping unit 22, a collimator lens (collimated-beam generating lens) 24, and a beam splitter (beam splitting unit) BS. The beam splitter BS may be replaced with a dichroic mirror DM. The beam-shaping unit 22 outputs a line-shaped beam. The collimator lens 24 is disposed with its focal position placed at an exit hole 26 of the beam-shaping unit 22 and turns the line-shaped beam from the exit hole 26 into a collimated beam and makes it incident on the beam splitter BS. The beam splitter BS reflects the collimated beam from the collimator lens 24 toward the objective lens 32 and transmits a part of the light coming from the objective lens 32. The beam splitter BS is provided to direct the line-shaped beam onto the specimen efficiently and to allow the confocal optical means 30 to collect Raman light from the specimen efficiently. The beam splitter BS is placed between the pair of lenses (the objective lens 32 and the imaging lens 34) in such an orientation that the surface struck by the beam coming from the beam-shaping unit 22 forms an angle of 45 degrees with the optical axis of the pair of lenses.

In the line-shaped irradiation means 20, the line-shaped beam output from the beam-shaping unit 22 is turned into a collimated beam by the collimator lens 24, is reflected by the beam splitter BS, and is directed onto the specimen through the objective lens 32. The combination of the collimator lens 24 and the objective lens 32 forms a line-shaped image IS on the specimen from the line-shaped beam coming from the exit hole 26 of the beam-shaping unit 22. In the present invention, the region in which the image IS is formed by irradiated light is called a measuring region of the specimen.

The movable stage 40 has a mounting surface parallel to the X-Y plane and moves the specimen S placed on the mounting surface in the Y direction (direction perpendicular to the figure). The travelling direction of the movable stage 40 should include at least the Y direction, and the movable stage 40 may be an X-Y stage or an X-Y-Z stage. Since the openings 38 of the aperture stop 36 are arranged in the X direction, a plurality of points (A, B, and C, for example) corresponding to the respective openings 38 in the measuring region of the specimen S are arranged in the X direction, too. When the specimen is moved in the Y direction by the movable stage 40, the arrangement of the points A, B, and C shifts in the Y direction, and the distribution (mapping) in the plane of the specimen can be measured efficiently.

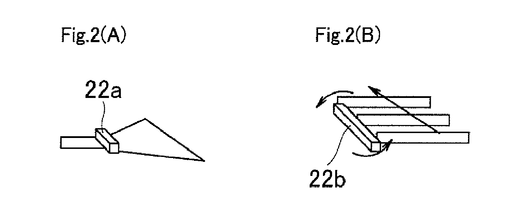

The specific configurations of two types, namely, a beam expansion type and a beam scanning type, of the beam-shaping unit 22 will be described next with reference to Figs. 2(A) and 2(B). In the beam expansion type shown in Fig. 2(A), the spot-like cross section of the beam is expanded in line by a cylindrical lens 22a or the like, and then the beam is emitted from the exit hole 26. The beam emitted from the exit hole 26 has a cross-sectional line shape extended in the Z direction, and the image IS formed on the specimen S has a line shape extended in the X direction. In the beam scanning type shown in Fig. 2(B), the beam having a spot-like cross section is emitted without being changed, and a galvanometer mirror 22b or the like is activated to change the position of beam emission at the exit hole 26, translating the optical path of the beam. The spot-like beam from the beam-shaping unit 22 scans the incidence plane of the collimator lens 24 in line (in the Z direction), and the image IS formed by the beam on the specimen S also has an extended line shape (in the X direction). In Fig. 1, the direction in which the image IS formed by the irradiated beam extends in line agrees with the arrangement direction of the openings 38 of the aperture stop 36.

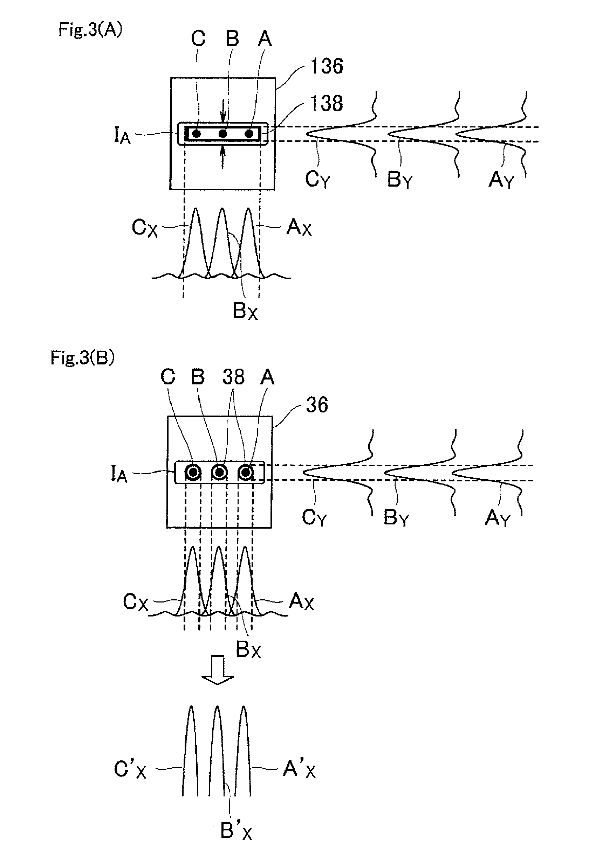

Raman light from the line-shaped region (measuring region) irradiated with the beam emitted by the line-shaped irradiation means 20 will be described in detail. Figs. 3(A) and 3(B) illustrate the difference between Raman light passing through the aperture stop 36 having the plurality of openings 38 and light passing through a conventional aperture stop 136 having a slit 138.

The confocal optical means 30 converts Raman light from the measuring region of the specimen into an image at the position of the aperture stop. In Figs. 3(A) and 3(B), it is assumed that the measuring region of the specimen is the same, and a Raman-light image IA of the same size is formed with either of the aperture stop 136 and the aperture stop 36. The openings 38 and the slit 138 of the apertures are indicated by thick lines. The slit in the aperture stop 136 is rectangular, and the openings in the aperture stop 36 are circular. The microscopic parts A, B, and C in the measuring region of the specimen shown in Fig. 1 correspond to regions denoted by black circles A, B, and C in the aperture stops 36 and 136. Raman light from the microscopic parts is diffracted, and interference (Airy disc) appears in the images formed by Raman light in the aperture stops 36 and 136. Figs. 3(A) and 3(B) show in Raman light intensity distributions (peak shapes) that diffraction expands the Raman light images. For example, a peak wave AX represents a light intensity distribution in the X direction of the image formed in the aperture by Raman light generated from the microscopic part A of the specimen, and a peak wave AY represents a light intensity distribution in the Y direction. The figures show schematically that the microscopic part A of the specimen is smaller than the openings 38 or the slit 138 and that the image IA formed in the aperture by Raman light coming from the microscopic part A is larger than the openings 38 or the slit 138.

In the aperture stop 136 shown in Fig. 3(A), the Y direction is the width direction of the slit, and Raman light passes through a narrow region of the slit 138. By detecting Raman light passing through the slit 138, high spatial resolution can be obtained in the Y direction. The X direction is the longitudinal direction of the slit, and Raman light passes through a wide region of the slit 138. For example, the peak wave Ax overlapped with peak wave Bx would pass through the slit 138. Because light including such crosstalk is detected, the spatial resolution in the X direction becomes low.

In contrast, in the aperture stop 36 of the present invention shown in Fig. 3(B), the diameters of the circular openings 38 are equal to the width of the slit 138, and an equally high spatial resolution can be obtained in the Y direction. In the X direction, the individual openings 38 of the aperture stop 36 pass the central parts of the peak waves Ax, Bx, and Cx, blocking Raman light including crosstalk, and high spatial resolution can be obtained in the X direction, too. The intensity distributions of Raman light passing through the openings 38 are represented by peak waves A'x, B'x, and C'x.

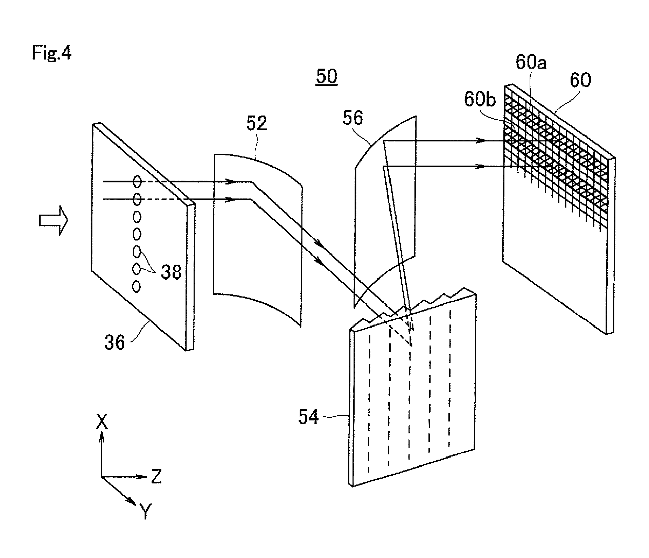

Fig. 4 shows an example of a process in which Raman light passing through the aperture stop 36 is dispersed by the spectroscope 50, and the light intensity is detected by the CCD detector 60 according to wavelength.

A generally known dispersive spectroscope can be used as the spectroscope 50. Many conventional spectroscopes use an entrance slit having a long, narrow hole, as an incident light entrance window. In this embodiment, however, the aperture stop 36 should be used at the incident-light entrance window of the spectroscope 50. The spectroscope 50 includes a front-stage mirror (collimated-beam generating unit) 52 for collimating the beams passing through the plurality of openings 38 of the aperture stop 36, a diffraction grating (dispersion unit) 54 for diffracting the collimated light beams coming from the front-stage mirror 52, and a back-stage mirror (imaging unit) 56 for imaging the light diffracted by the diffraction grating 54 on the CCD detector 60 located at a subsequent stage.

A plane including the optical paths of the beams dispersed by the diffraction grating 54 according to wavelength is considered as a dispersion plane. The positional relationship between the aperture stop 36 and the diffraction grating 54 is determined in such a manner that a plurality of dispersion planes formed by beams passing through the plurality of openings 38 of the aperture stop 36 become perpendicular to the arrayed direction of the openings 38. The diffraction grating 54 turns Raman light passing through each opening 38 into light that is dispersed according to wavelength, and the back-stage mirror 56 allows an image to be formed on the light receiving surface of the CCD detector 60, which is a two-dimensional array detection unit. Since the dispersion plane (YZ plane) of Raman light is perpendicular to the arrayed direction (X direction) of the openings 38, the beams are received independently of one another at the light receiving surface of the CCD detector 60 without any interference between the dispersed light beams of adjacent beams. A spectral line is detected from an array of elements (60a, for example) enclosed by a thick line on the light receiving surface shown in Fig. 4. As a result, the CCD detector 60 can obtain spectral information of the light passing through each opening 38 of the aperture stop 36 without lowering the quality of the spectrum.

A technique for collectively obtaining spectral information of a plurality of lines in a single exposure process by dividing the array of elements in the CCD detector 60 into tracks will now be briefly described.

### Dividing into tracks

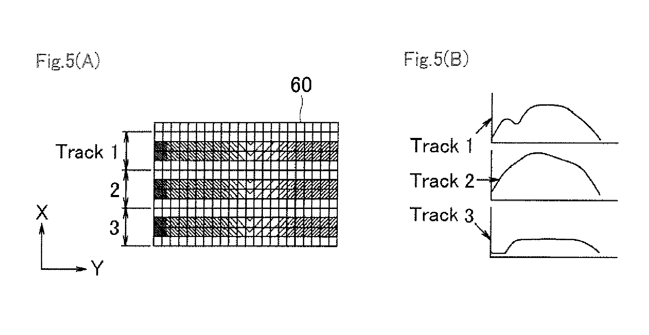

Spectral information of a single line is detected from rows of elements near the line of intersection between the light receiving surface of the CCD detector 60 and the dispersion plane of the Raman light, as shown in Fig. 5(A). In the figure, four rows of elements are taken as a single track. The light receiving surface is divided into tracks at every line of intersection between the light receiving surface and the dispersion plane, and the spectral information is obtained in each track, as shown in Fig. 5(B).

### Binning

The CCD detector 60 receives Raman light with its entire light-receiving surface (exposure), then stops exposure, and executes binning in units of tracks. The binning process is a process in which several elements are handled as a group of elements in a division and the total charge of elements in the division is read out altogether. Since the total number of elements whose charges are read out is reduced, the frame rate is improved. In particular, in detection of Raman light, which is very weak light, it is preferable to read charges accumulated in a plurality of pixels altogether. If elements in the Y direction are divided into tracks at every four rows, as shown in Fig. 5(A) showing the exposure state, the charges of the four rows should be processed by the binning process. If the number of openings 38 in the aperture stop 36 is changed, the number of tracks on the light receiving surface should be adjusted to match the number of openings 38 for the binning process. The spectral information of a single line is obtained by the binning process in units of four rows. When the binning process of all the tracks ends, the spectral information of a plurality of lines can be obtained simultaneously.

In this embodiment, the aperture stop 36 has the plurality of openings 38, and light from microscopic parts of the specimen S in one-to-one correspondence with the openings 38 forms images at the positions of corresponding openings 38. Therefore, light from the microscopic parts of the specimen S corresponding to the openings 38 is detected with the same spatial resolution as with a aperture stop having a circular opening. Distribution measurement in a given measuring region on the specimen S can be executed at high speed and with high resolution, by detecting light passing through the openings 38 separately, obtaining the spectral information of the transmitted light, and reconstructing an image on a computer.

Light passing through the plurality of openings 38 arranged in line is dispersed in directions orthogonal to the direction in which the openings 38 are arranged, and the CCD detector 60 detects the dispersed light according to wavelength. Light passing through one opening 38 is received by the CCD detector 60 independently of light passing through another opening 38, while maintaining the high spatial resolution, and a plurality of pieces of spectral information corresponding to the plurality of openings 38 are output altogether. Thus, the optical spectral information of a plurality of microscopic parts of the specimen S corresponding to the plurality of openings 38 arranged in line can be obtained without lowering the quality of the spectrum.

### Second Embodiment

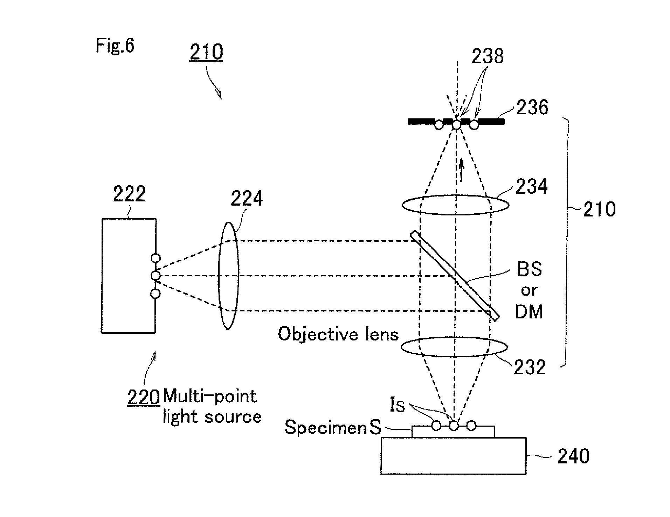

Fig. 6 shows an outlined configuration of a Raman spectroscopy apparatus 210 according to a second embodiment of the confocal microscopy apparatus in the present invention. The structure of a specimen irradiation means in the Raman spectroscopy apparatus 210 differs greatly from that in the Raman spectroscopy apparatus 10 in the first embodiment. In other respects, the apparatuses are almost the same.

A multi-point light source (multi-point irradiation means) 220 is used as the specimen irradiation means. The multi-point light source 220 emits a plurality of spot-like beams simultaneously from its exit holes. If a plurality of points of the specimen S correspond to a plurality of openings 238 of an aperture stop 236, the specimen S can be irradiated with spot-like beams only at the plurality of points. The multi-point light source 220 includes a light source 222 having a plurality of point light sources, a collimator lens (collimated-beam generating lens) 224 for turning light from the plurality of point light sources into collimated beams, and a beam splitting element (beam splitter BS or dichroic mirror DM) disposed between a pair of lenses (an objective lens 232 and an imaging lens 234). Fig. 6 shows a plurality of images IS formed on the specimen by beams coming from the plurality of point light sources.

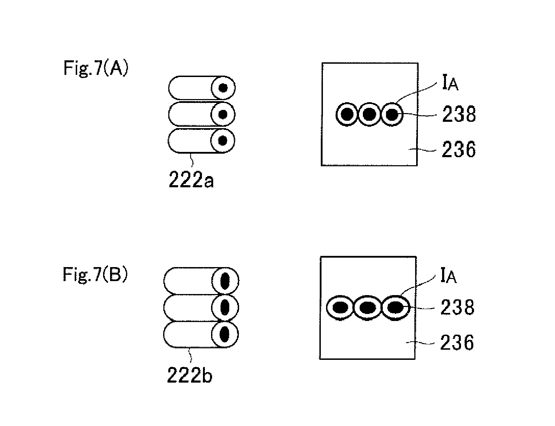

A fiber bundle 222a as shown in the left part of Fig. 7(A) may be used as the light source 222. The fiber bundle 222a is a bundle of optical fibers, with the end faces of the optical fibers arranged to serve as the plurality of point light sources of the multi-point light source 220. The beams emitted from the end faces of the optical fibers are turned into collimated beams by the collimator lens 224, pass through the beam splitter BS and the objective lens 232, and form images at a plurality of points on the specimen S. The right part of Fig. 7(A) shows Raman light images formed in the aperture stop 236 when the light sources have circular cross sections. Circles IA indicated by thick lines in the figure are the Raman light images, and inner black circles represent the openings 238 in the aperture stop.

A fiber bundle 222b using polarization-maintaining fibers as shown in the left part of Fig. 7(B) may also be used. Each optical fiber has an elliptical cross section. The right part of Fig. 7(B) shows Raman light images formed on the aperture stop 236 when the light sources have elliptical cross sections. Ellipses IA indicated by thick lines in the figure represent the Raman light images, and inner black ellipses represent the openings 238 in the aperture stop.

In this embodiment, the specimen can be irradiated with beams from the light source at a plurality of points. If a plurality of points corresponding to a plurality of openings are distributed in line on the specimen, those points can be irradiated efficiently by multi-point irradiation. As a result, the usage efficiency of the beams is improved, and the specimen can be protected from damage caused by excessive irradiation.

The confocal microscopy apparatus according to the present invention can be applied not only to an apparatus for obtaining spectral information of Raman light from the specimen S but also to a fluorescence spectrophotometer for obtaining a fluorescence spectrum by collecting fluorescence from the specimen S.
The specimen irradiation means in the present invention may irradiate the measuring region of the specimen with infrared interference waves emitted from an interferometer, after changing the light from an infrared light source to the interference waves by the interferometer. If this type of specimen irradiation means is used, the confocal microscopy apparatus according to the present invention can be used as an infrared spectrophotometer utilizing a multi-channel infrared detector.

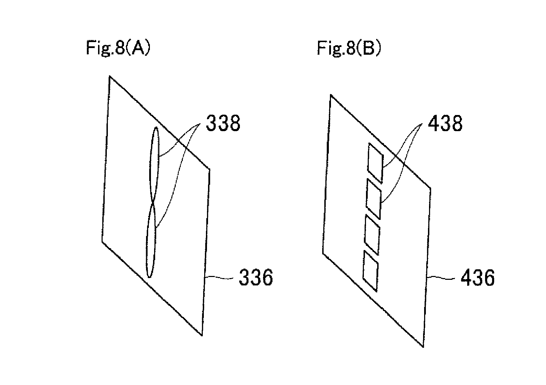

Figs. 8(A) and 8(B) show modifications of the aperture stops having the plurality of openings. An aperture stop 336 having two elliptical openings 338 arranged in the longitudinal direction, as shown in Fig. 8(A), or an aperture stop 436 having square openings 438 arranged in line, as shown in Fig. 8(B), may be used. The number of openings in the aperture stop should be selected in accordance with the purpose of measurement. The mode used for the same purpose of measurement may be switched in multiple stages from an ultra-high-speed measurement mode (a small number of openings) to a high-spatial-resolution measurement mode (a large number of openings), by changing the number of openings in the aperture stop. A wide variety of measurements can be implemented.

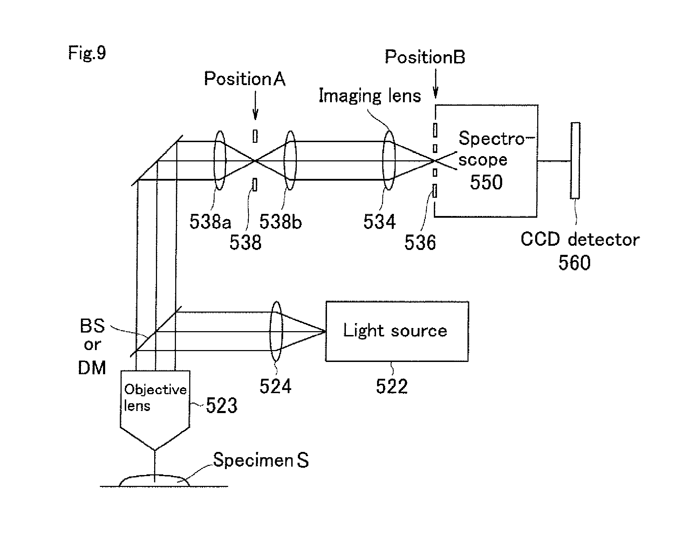

As shown in Fig. 9, adjustment of the apparatus can be simplified by disposing aperture stops 536 and 538 at different positions on the optical path. In the figure, the aperture 538 has a slit and is placed at position A, and the aperture stop 536 has a plurality of openings and is placed at position B. In this case, the aperture stop 536 of the present invention is placed at least at position B, which is the entrance to the spectroscope. The aperture stop 536 may also be placed at position A.

### Reference Numerals

10: Laser Raman microscopic spectrophotometer (confocal microscopy apparatus)
20: Line-shaped irradiation light source (line-shaped irradiation means)
22: Beam-shaping unit
24: Collimator lens (collimated-beam generating lens)
26: Exit hole
30: Confocal optical means
32: Objective lens
34: Imaging lens
36: Aperture stop
38: Openings
40: Movable stage
50: Spectroscope
52: Front-stage mirror (collimated-beam generating unit)
54: Diffraction grating (dispersion unit)
56: Back-stage mirror (imaging unit)
60: CCD detector (two-dimensional array detection unit)
220: Multi-point light source (multi-point irradiation means)
222: Light source
224: Collimator lens (collimated-beam generating lens)
236: Aperture stop
238: Openings
BS: Beam splitter (beam splitting unit)
DM: Dichroic mirror (beam splitting unit)
S: Specimen

## Claims

1. A confocal microscopy apparatus (10) for irradiating a measuring region of a specimen with light and for obtaining spectral information of light from the measuring region, comprising:
a specimen irradiation means (20) for irradiating the measuring region with light;
an objective lens (32) disposed with its focal plane set at the measuring region;
an imaging lens (34) for forming an image from light collected by the objective lens;
an aperture stop (36) ; and
spectrum obtaining means (50, 60);
**characterized in that** the aperture stop (36) have a plurality of openings disposed on an imaging plane of the imaging lens, and that the spectrum obtaining means (50, 60) detect light passing through the plurality of openings and obtain the spectral information of light passing through each of the openings.

2. A confocal microscopy apparatus according to claim 1 wherein the plurality of openings of the aperture stop are arranged in line, and wherein the spectrum obtaining means comprising:
a collimated-beam generating unit (52) which optically turns light passing through the plurality of openings into collimated beams;
a dispersion unit (54) which disperses the collimated beams according to wavelength; and
a two-dimensional array detection unit (60) having many elements that receive the dispersed light; and
when a plane containing the optical path of dispersed light according to wavelength is defined as a dispersion plane, the orientation of the dispersion unit (54) with respect to the aperture stop (36) be set to make the dispersion planes of collimated beams generated for beams passing through the openings parallel to one another.

3. A confocal microscopy apparatus according to claim 2, further for a plurality of points on the specimen corresponding to the plurality of openings arranged in line, a movable stage (40) for moving the specimen in a direction orthogonal to the direction in which the plurality of points are arranged be provided.

4. A confocal microscopy apparatus according to one of claim 2 to 3, wherein the specimen irradiation means be a line-shaped irradiation means (20) for irradiating a line-shaped measuring region that includes at least a plurality of points on the specimen corresponding to the plurality of openings arranged in line.

5. A confocal microscopy apparatus according to one of claim 2 to 3, wherein the specimen irradiating means be a multi-point irradiation means (220) for irradiating in a point-shape manner the measuring region that includes a plurality of points on the specimen corresponding to the plurality of openings arranged in line.

6. A confocal microscopy apparatus according to claim 5, wherein the multi-point irradiation means (220) comprising:
a light source (222) having a plurality of point light sources;
a collimated-beam generating lens (224) which turns light from the plurality of point light sources into collimated beams; and
a beam splitting element (BS or DM) disposed between the objective lens (232) and the imaging lens (234);
wherein the beam splitting element (BS or DM) reflect the collimated beams from the collimated-beam generating lens (224) toward the objective lens (232) and transmit part of the light coming from the objective lens (232).
